# EUROPÄISCHE PATENTANMELDUNG

(11) **EP 1 445 050 A1**
(43) Veröffentlichungstag der Anmeldung: **11.08.2004**
(21) Anmeldenummer: 04002611.4
(22) Anmeldetag: 05.02.2004
(51) Int. Cl.: B23B 31/107, B23B 29/04

(54) **Werkzeugadapter**

(30) Priorität: 05.02.2003 DE 10305601
(71) Anmelder: Flam, Mirko, 72636 Tischardt (DE)
(72) Erfinder: Flam, Mirko, 72636 Tischardt (DE)
(74) Vertreter: Fürst, Siegfried

(57) **Zusammenfassung**

Die vorliegende Erfindung beschreibt einen rotationssymmetrischen Werkzeugadapter (1) für rotierende und nicht rotierende Bohr-, Fräs und/oder Drehwerkzeuge oder dergleichen. Der Werkzeugadapter (1) weist einen Kegelabschnitt (5) auf, um den Werkzeugadapter (1) in einer Werkzeugaufnahme (4) einzuspannen. Dabei liegt eine Plananlage (3) eines Bundes (2) des Werkzeugadapters (1) an einer Anschlagsfläche (13) der Werkzeugaufnahme (4) unmittelbar an. An den Kegelabschnitt (5) des Werkzeugadapters (1) schließt sich ein zylindrischer Abschnitt (8) an. In dem Kegelabschnitt (5) sind über seinen Umfang verteilt symmetrisch zwei oder mehr Querbohrungen (6) eingebracht. Des weiteren wird eine entsprechende Werkzeugaufnahme (4) sowie ein System bestehend aus Werkzeugadapter (1) und Werkzeugaufnahme (4) angegeben.

## Beschreibung

Die vorliegende Erfindung betrifft einen Werkzeugadapter nach dem Oberbegriff des Patentanspruchs 1.

Mit derartigen Adaptern werden Bohr-, Fräs-, Säge- oder sonstige rotierende Werkzeuge an der Werkzeugaufnahme einer rotierenden Werkzeugspindel einer Bearbeitungsmaschine oder für die spanende Bearbeitung nicht rotierende Werkzeuge, wie z.B. Drehstähle, Bohrstangen, Abstechstähle o. ä., in einem Werkzeughalter, Stern- oder Planrevolver der Bearbeitungsmaschine lösbar und austauschbar befestigt. Dazu wird ein Werkzeug oder dessen Schaft an der Werkzeugseite des Adapters in an sich bekannter Weise eingespannt oder festgelegt. Die Maschinenseite des Werkzeugadapters ihrerseits wird an der Werkzeugaufnahme befestigt, wobei entweder die Werkzeugaufnahme lösbar an der rotierenden Werkzeugspindel des Bearbeitungswerkzeugs befestigbar ist oder die Werkzeugaufnahme bereits einen Bestandteil dieser Werkzeugspindel bildet. Der Werkzeugadapter ist dabei rotationssymmetrisch zur Rotationsachse des Werkzeugs ausgebildet, um bei den bei der Fräs-, Bohr- oder Schleifbearbeitung auftretenden hohen Drehgeschwindigkeiten Unwuchten zu vermeiden.

Im Stand der Technik sind Werkzeugadapter bekannt, bei denen ein in axialer Richtung gesehen zur Maschinenseite hin konisch zulaufender Kegelabschnitt mit einem sich zur Werkzeugseite hin daran unmittelbar anschließenden Bund versehen ist, wobei die Stirnflächen des Bundes senkrecht zur Rotationsachse des Werkzeugadapters ausgerichtet sind. An diesen Bund schließt sich die Werkzeugseite mit einer an sich bekannten Vorrichtung zur Befestigung eines Werkzeuges oder Werkzeugschaftes an. Zur Verbindung des Werkzeugadapters mit der Werkzeugaufnahme dient eine in in dem Werkzeugadapter sowie in der Werkzeugaufnahme angeordnete Bohrung. In diese korrespondierenden Bohrungen wird ein Spannbolzen, eingesetzt und üblicherweise über ein Innengewinde in den Bohrungen sowie ein Außengewinde am Spannbolzen festgelegt. Derart wird der Werkzeugadapter in der Werkzeugaufnahme lösbar, austauschbar festgelegt, wobei ein Kegelabschnitt zur Führung/Ausrichtung des Werkzeugadapters relativ zur Werkzeugaufnahme dient. Diese verfügt hierzu über eine entsprechend kegelförmig ausgebildete Aufnahmeöffnung für den Kegelabschnitt des Werkzeugadapters sowie über eine plane Anschlagsfläche, die in zusammengesetztem Zustand unmittelbar an der Plananlage des Bundes des Werkzeugadapters anliegt und für eine exakte Ausrichtung des Werkzeugadapters relativ zur Werkzeugaufnahme bzw. zur Rotationsachse dient.

Die Adapter werden dazu verwendet, um insbesondere Werkzeuge mit unterschiedlichen Werkzeugschaftdurchmessern an ein und derselben Werkzeugspindel oder Werkzeughalteraufnahme einer Bearbeitungsmaschine verwenden zu können, sowie die Werkzeuge in einfacher und kostengünstiger Weise rasch auszutauschen.

Als nachteilig hierbei hat sich jedoch erwiesen, dass insbesondere wenn mehrere Adapter, in axialer Richtung gesehen, hintereinander verwendet werden sollen, um zum Beispiel in einer Werkzeugspindel mit großem Durchmesser ein Werkzeug mit geringem Schaftdurchmesser verwenden zu können, d.h. also, wenn mehrere Adapter als Zwischenstufen verwendet werden, die exakte axiale Ausrichtung der einzelnen Adapter zueinander und zur Werkzeugspindel mit den bekannten Adaptern nicht möglich ist, da durch das einseitige Einspannen/Festlegen mit einem einzigen Spannbolzen stets ein seitlicher Versatz in axialer Richtung gesehen auftritt. Des weiteren können Kräfte, die senkrecht zur Rotationsachse wirken, was insbesondere beim Fräsen auftritt, mit den bekannten Adaptern nicht in ausreichender Weise aufgefangen werden und es treten Unwuchten auf. Das bedeutet, dass bei einer Querbelastung der Adapter, auch wenn er fest in die Werkzeugaufnahme eingespannt ist, stets einer geringfügigen Verkippung unterliegt, so dass das Bearbeitungsergebnis verschlechtert wird.

Ausgehend von diesem Stand der Technik ist der Fachmann vor die Aufgabe gestellt, einen Adapter dahingehend zu verbessern, dass die axiale Ausrichtung des Adapters sowie des darin festgelegten Werkzeuges relativ zur Werkzeugaufnahme auch beim Auftreten hoher Querbelastungen zuverlässig gewährleistet ist, sowie das Einspannen des Werkzeugadapters in der Werkzeugaufnahme mit korrekter axialer Ausrichtung erfolgt.

Erfindungsgemäß wird diese Aufgabe durch einen Werkzeugadapter mit den Merkmalen des Patentanspruchs 1 gelöst. Vorteilhafte Ausgestaltungen der Erfindung sind Gegenstand von Unteransprüchen.

Der Kerngedanke der Erfindung besteht darin, dass der Werkzeugadapter einen weiteren zylindrischen Abschnitt aufweist. Das bedeutet, dass sich in axialer Richtung zur Maschinenseite hin gesehen an den Kegelabschnitt ein weiterer Abschnitt, der vorzugsweise einstückig an den Kegelabschnitt angeformt ist, mit einem über seine axiale Längserstreckung im wesentlichen konstanten Durchmesser anschließt. Dieser Zylinderabschnitt, der in eine entsprechend ausgebildete und dimensionierte zylindrische Ausnehmung in der Werkzeugaufnahme eingreift, nimmt die bei der Bearbeitung entstehenden Querkräfte auf, da er sich über seinen gesamten Umfang und seine gesamte Länge an den inneren Wandungen der entsprechenden Bohrung in der Werkzeugaufnahme abstützt bzw. unmittelbar an diesen anliegt. Dieser Zylinderabschnitt kann nach einer Ausführungsvariante auch durch einen zylindrischen Polygonabschnitt, der vorzugsweise einstückig an den Kegelabschnitt angeformt ist, ersetzt werden. Ein solcher Polygonabschnitt, der in eine entsprechend ausgebildete und dimensionierte zylindrische Polygonausnehmung in der Werkzeugaufnahme eingreift nimmt die bei der Bearbeitung entstehenden Querkräfte auf da er sich über seinen gesamten Umfang und seine gesamte Länge an den inneren Wandungen der entsprechenden Polygonausnehmung abstützt bzw. unmittelbar an diesen anliegt. In einer weiteren speziellen Ausgestaltung hat dieser zylindrische Polygonabschnitt zusätzlich eine halbrund nach innen geformte Werkzeug-Orientierungskerbe.
Durch den zylindrischen Polygonabschnitt mit dimensionierter Polygonausnehmung wird bei rotierenden Werkzeugen gleichzeitig ein formschlüssiger positiver Mitnahmeeffekt erzielt, übertragen von der Werkzeugaufnahme auf den oder die anschließenden Adapter und das stirnseitig angeordnete Werkzeug.
Auch werden die Querkräfte von den symmetrisch um den Umfang des Kegelabschnitts in den Querbohrungen verteilt angeordneten Spannbolzen gemeinsam aufgenommen. Mit diesen Spannbolzen ist zudem erreicht, dass der Adapter in der Werkzeugaufnahme symmetrisch einspannbar ist. Dies ist insbesondere dann möglich, wenn die Spannbolzen sukzessive nacheinander, z.B. in den als Gewindebohrungen ausgelegten Querbohrungen, schrittweise angezogen werden. Vorzugsweise sind zwei Querbohrungen einander gegenüberliegend vorgesehen, es können aber auch drei, vier oder sechs äquidistant über den Umfang des Kegelabschnitts verteilt angeordnet sein.

Vorzugsweise verfügt der Werkzeugadapter über eine zentrale, axiale Bohrung für die Kühlmittelzufuhr im Inneren des Werkzeugadapters. Dadurch ist die Kühlung des Bearbeitungswerkzeuges sowie das Abführen z.B. des zerspanten Materials vom zu bearbeitenden Werkstück zuverlässig gewährleistet.

In einer vorteilhaften Weiterbildung der Erfindung sind am Werkzeug oder an der Befestigungsvorrichtung des Werkzeugadapters Mitnehmernuten bzw. dazu komplementäre Führungsstege ausgebildet, um das Werkzeug in der Befestigungsvorrichtung des Werkzeugadapters mit definierter Schneidenlage, d.h. in gewünschter Stellung, einzusetzen. Insbesondere ist vorgeschlagen, dass zwei Nuten/Führungsstege ausgebildet sind, die jeweils unterschiedlich z.B. in unterschiedlicher Tiefe ausgeführt sind, um eine exakte Ausrichtung in Rotationsrichtung gesehen des Werkzeugs bezüglich des Adapters zu erhalten. Gleichartige Nuten/Führungsstege können z.B. auch an der Ausnehmung der Werkzeugaufnahme für die kegelförmigen und zylindrischen Abschnitte des Werkzeugadapters bzw. umgekehrt vorgesehen sein sowie an einer Einspannvorrichtung, mit der die Werkzeugaufnahme an der rotierenden Werkzeugspindel der Bearbeitungsmaschine festgelegt wird.

Zur Festlegung des Werkzeugadapters an der Werkzeugaufnahme sind die Querbohrungen vorzugsweise als Kegelbohrungen ausgeführt, um insbesondere Spannbolzen zu verwenden, wie sie in der auf denselben Anmelder zurückgehenden DE 202 08 610 offenbart sind.

Zur exakten Ausrichtung des Werkzeugadapters bezüglich der Werkzeugaufnahme ist des weiteren vorgeschlagen, dass die Plananlage am Bund des Werkzeugadapters als Hohlschliff ausgeführt ist, das heißt, dass die Plananlage nicht exakt senkrecht zur Rotationsachse des Werkzeugadapters ausgerichtet ist, sondern mit einer geringfügigen Neigung, so dass der radial äußere Rand der Plananlage beim Einspannen in die Werkzeugaufnahme zuerst mit der korrespondierenden Anschlagsfläche an der Werkzeugaufnahme in Kontakt kommt und derart eine exakte Ausrichtung sowie der passgenaue Sitz des Adapters an der Werkzeugaufnahme erreicht wird.

Zur leichteren Einführung des zylindrischen Abschnitts des Werkzeugadapters in die korrespondierende zylindrische Ausnehmung der Werkzeugaufnahme ist der zylindrische Abschnitt an seinem freien Ende mit einer Fase oder konisch zulaufenden Abschrägung versehen. Diese Fase kann auch mit einem Hinterschnitt ausgeführt sein, so dass der zylindrische Abschnitt an diesem freien Ende mit einer kragenförmig umlaufenden Schulter ausgestaltet ist. Für diesen elastischen Zentrierbund kann auch die zylindrische Ausnehmung in der Werkzeugaufnahme entsprechend ausgebildet sein, das heißt, dass am Grund der zylindrischen Ausnehmung in der Werkzeugaufnahme diese geringfügig radial erweitert ist.

Zum Ausgleich von Unwuchten im Werkzeugadapter oder im Werkzeug sind im Bund des Werkzeugadapters symmetrisch über dessen Umfang verteilt Ausnehmungen vorgesehen, in die Wuchtgewichte einsetzbar sind. Vorteilhafter Weise sind diese Ausnehmungen bzw. die Wuchtgewichte entsprechend der auf den Anmelder zurückgehenden DE 202 17 172 ausgebildet. Mit sechs äquidistant über den Umfang des Bundes verteilt angeordneten Bohrungen für die Wuchtgewichte lassen sich die auftretenden Unwuchten am besten ausgleichen.

Im Rahmen der Erfindung ist die Werkzeugaufnahme für den vorstehend beschriebenen Werkzeugadapter jeweils entsprechend ausgebildet, das heißt sie verfügt unter anderem über eine sich an die kegelförmige Öffnung anschließende zylindrische Ausnehmung für den Zylinderabschnitt des Werkzeugadapters sowie über Bohrungen, um mit Spannbolzen, die in die Querbohrungen des Werkzeugadapters eingreifen, diesen an der Werkzeugaufnahme festzulegen.

In bevorzugter Weise ist die Werkzeugaufnahme auch entsprechend den vorstehend beschriebenen Ausgestaltungen ausgeführt.

In besonders vorteilhafter Weise werden die Werkzeugaufnahme sowie der Werkzeugadapter gemeinsam als System verwendet, um zum einen die präzise axiale Ausrichtung des Adapters bzw. des daran angeordneten Werkzeuges zu erreichen und zum anderen Beeinträchtigungen, die durch beim Bearbeiten auftretende Querbelastungen auftreten können, zu vermeiden.

Weitere Einzelheiten, Merkmale und Vorteile der Erfindung lassen sich dem nachfolgenden Beschreibungsteil entnehmen, in dem anhand von Zeichnungen ein Ausführungsbeispiel der Erfindung näher dargestellt ist. Es zeigen:
- **Figur 1:**: einen Werkzeugadapter im Querschnitt,
- **Figur 2:**: eine Werkzeugaufnahme,
- **Figur 3:**: einen Spannbolzen, und
- **Figur 4:**: das Werkzeugadaptersystem.

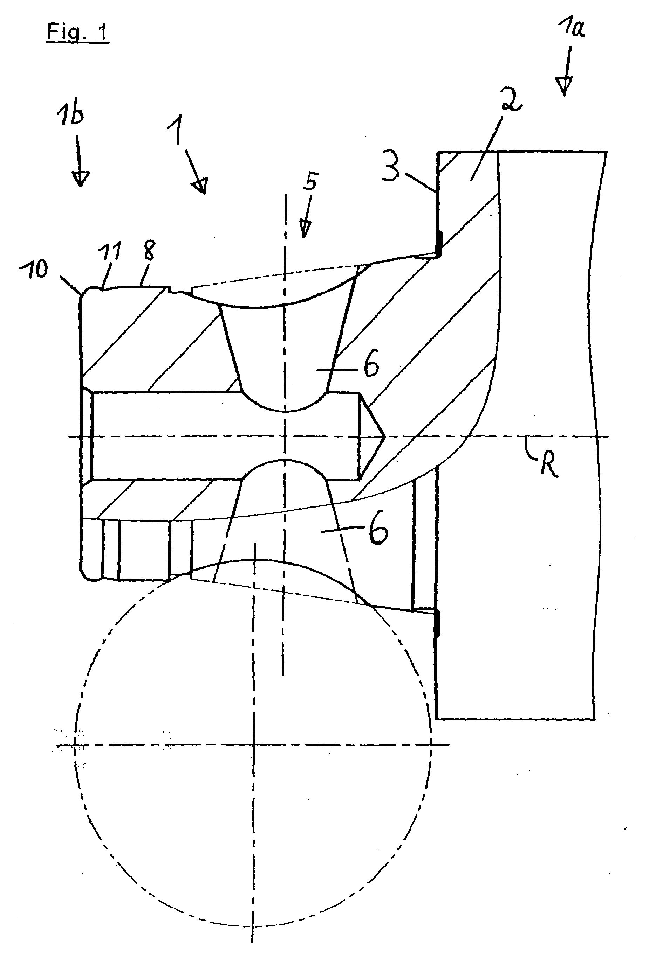

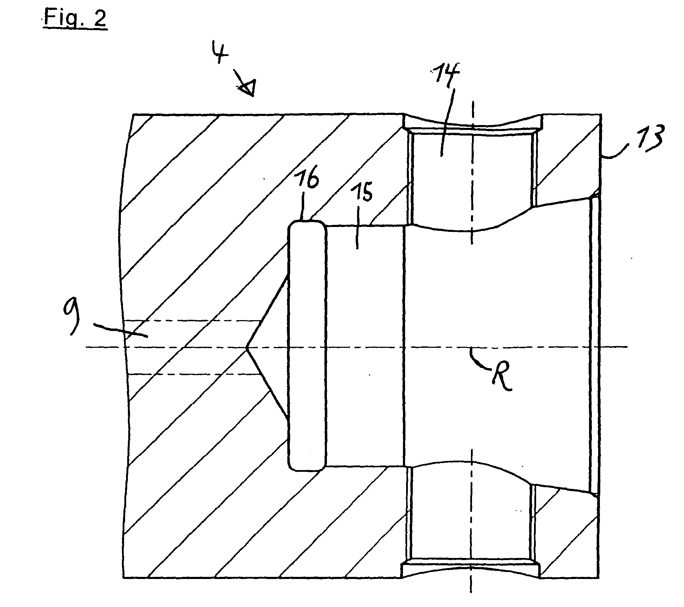

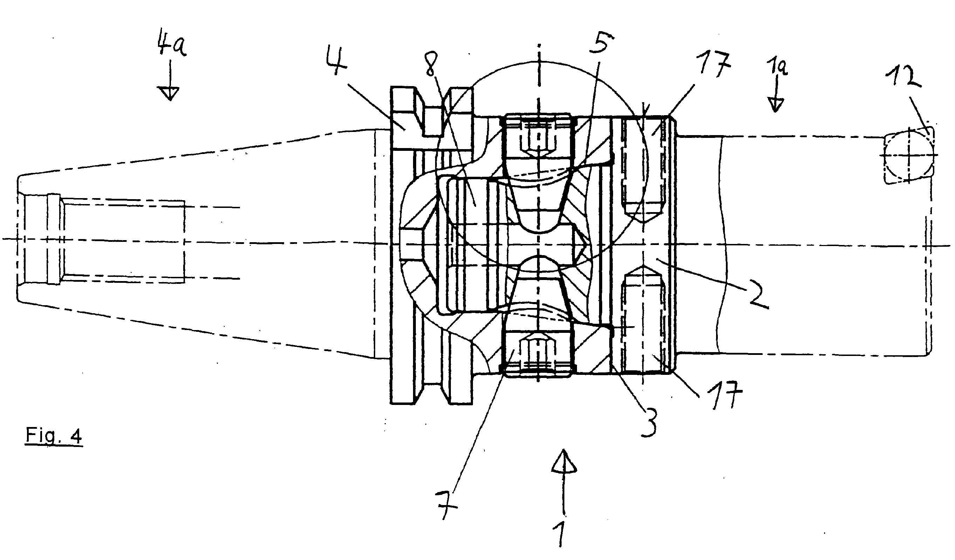

Bei dem in Figur 1 dargestellten Ausführungsbeispiel der Erfindung handelt es sich um einen Werkzeugadapter 1, der im wesentlichen zur Rotationsachse R symmetrisch ausgebildet ist. Der Werkzeugadapter 1 verfügt über einen Bund 2 mit einer Plananlage 3, die im wesentlichen senkrecht zur Rotationsachse R ausgerichtet ist. In zusammengesetztem Zustand des Werkzeugadapters 1 mit der Werkzeugaufnahme 4 z. B. aus Figur 2 liegt diese Plananlage 3 im wesentlichen vollflächig und unmittelbar an der Anschlagsfläche 13 der Werkzeugaufnahme 4 an. Die Plananlage 3 kann auch einen Hohlschliff aufweisen, das heißt sie ist geringfügig gegen die Senkrechte zur Rotationsachse R geneigt, wobei der radial äußere Bereich der Plananlage 3 beim Verspannen des Werkzeugadapters 1 mit der Werkzeugaufnahme 4 zuerst mit der Anschlagsfläche 13 in Berührung kommt. An den Bund 2 schließt sich zur Werkzeugseite 1a hin in an sich bekannter Weise eine Befestigungsvorrichtung für rotierende Werkzeuge an, wie in Figur 4 schematisch dargestellt.

An den Bund 2 schließt sich zur Maschinenseite 1b hin ein Kegelabschnitt 5 an, der zur Führung und Ausrichtung des Werkzeugadapters 1 bezüglich der Werkzeugaufnahme 4 dient. In dem Kegelabschnitt 5 sind symmetrisch über dessen Umfang verteilt Querbohrungen 6 eingebracht, vorzugsweise zwei diametral einander gegenüberliegende. In diesen Querbohrungen 6 sowie in korrespondierende Bohrungen 14 in der Werkzeugaufnahme 4, bevorzugt Gewindebohrungen, sind Spannbolzen 7 angeordnet, um den Werkzeugadapter 1 lösbar an der Werkzeugaufnahme 4 festzulegen bzw. zu verspannen.

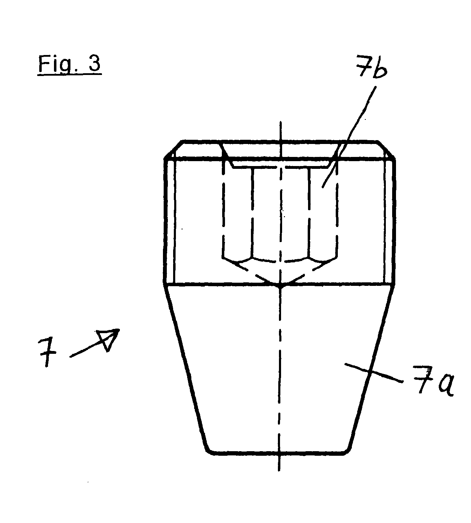

Die Spannbolzen 7, wie in Figur 3 dargestellt, weisen vorzugsweise ebenfalls einen Kegelabschnitt 7a auf, wobei die Bohrung 14 in der Werkzeugaufnahme 4 und/oder die Querbohrung 6 im Werkzeugadapter 1 korrespondierend ausgebildet sind. Der Spannbolzen 7 ist in einfacher Weise mit einem Inbusschlüssel, der in eine entsprechende Öffnung 7b im Spannbolzen eingreifen kann, in die Bohrungen 14, 6 einschraubbar.

Die Werkzeugaufnahme 4 und der Werkzeugadapter 1 verfügen über eine zentrale Bohrung 9, um durch sie hindurch Kühlmittel zum Werkzeug, das an der Werkzeugseite 1a des Adapters 1 in an sich bekannter Weise festlegbar ist, zu fördern.

An den Kegelabschnitt 5 des Werkzeugadapters 1 schließt sich unmittelbar und einstückig daran angeformt ein Zylinderabschnitt 8 an, dessen Radius über seine Längserstreckung im wesentlichen konstant ist. Dieser Zylinderabschnitt 8 greift in eine entsprechend ausgebildete zylindrische Ausnehmung 15 in der Werkzeugaufnahme 4 ein, wobei der Umfang des Zylinderabschnitts 8 im wesentlichen vollflächig und unmittelbar an der inneren Wandung der zylindrischen Ausnehmung 15 anliegt. Dieser Zylinderabschnitt 8 nimmt dadurch die beim Bearbeiten auftretenden Querkräfte auf und verhindert, dass der Werkzeugadapter 1 seitlich verkippt.

Das freie Ende des Zylinderabschnitts 8 ist zur Erleichterung des Einführens des Werkzeugadapters 1 in die korrespondierende Öffnung der Werkzeugaufnahme 4 mit einer Fase 10 versehen, so dass das freie Ende konisch zulaufend ausgebildet ist. Des weiteren kann ein Hinterschnitt 11 am freien Ende des Zylinderabschnitts 8 vorgesehen sein, um derart einen elastischen Zentrierbund an dem Zylinderabschnitt 8 auszubilden. Eine entsprechende Radiuserweiterung 16 kann an der zylindrischen Ausnehmung 15 in der Werkzeugaufnahme 4 vorgesehen sein.

Aus der in Figur 1 ist dieser elastische Zentrierbund ersichtlich mit einer Fase 10, einem sich daran anschließenden Kreissegment, um den Hinterschnitt 11 zu bilden, sowie einem weiteren, geradlinig verlaufenden Abschnitt, um in den Zylinderabschnitt 8 mit konstantem Radius überzugehen.

Des Weiteren können an dem Bund 2 Wuchtbohrungen 17 ausgebildet sein, insbesondere sechs symmetrisch über den Umfang verteilt, um, wie vorstehend beschrieben, Auswuchtgewichte an dem Werkzeugadapter 1 anbringen zu können, wie aus der schematischen Darstellung des zusammengesetzten Werkzeugadaptersystems in Figur 4 ersichtlich. Dort ist die Werkzeugaufnahme 4 mit einer nur prinzipiell angedeuteten Einspannvorrichtung 4a versehen, um die Werkzeugaufnahme 4 ihrerseits an der rotierenden Werkzeugspindel einer Bearbeitungsmaschine einzuspannen.

Mit den vorstehend beschriebenen Nuten/Führungsstegen an der Werzeugseite 1a des Werkzeugadapters 1 bzw. am Werkzeug oder umgekehrt ist es möglich, die Schneide 12 des Werkzeugs in gewünschter Lage in Drehrichtung gesehen auszurichten.

### Bezugszeichenliste

- 1: Werkzeugadapter
- 1a: Werkzeugseite von 1
- 1b: Maschinenseite von 1
- 2: Bund von 1
- 3: Plananlage an 2
- 4: Werkzeugaufnahme
- 4a: Einspannvorrichtung von 4
- 5: Kegelabschnitt von 1
- 6: Querbohrung in 5
- 7: Spannbolzen
- 7a: Kegelabschnitt von 7
- 7b: Inbuss in 7
- 8: Zylinderabschnitt von 1
- 9: zentrale Bohrung in 1, 4
- 10: Fase an 8
- 11: Hinterschnitt
- 12: Schneide eines Werkzeugs
- 13: Anschlagsfläche an 4
- 14: radiale Bohrung in 4
- 15: zylindrische Ausnehmung in 4
- 16: Radiuserweiterung in 15
- 17: Bohrung in 2
- R: Rotationsachse

## Patentansprüche

1. Werkzeugadapter (1) für rotierende und nicht rotierende Bohr-, Fräs- und/oder Drehwerkzeuge oder dergleichen, wobei der Werkzeugadapter (1) im Wesentlichen rotationssymmetrisch ist, mit einer Werkzeugseite (1a), an der besagte Werkzeuge oder dergleichen festlegbar sind, einem den Bund (2) Werkzeugadapter (1) in eine Werkzeugseite (1a) und eine Maschinenseite (1b) unterteilenden, einem Kegelabschnitt (5) mit einer Querbohrung (6) zur Aufnahme eines Spannbolzens (7) zur Festlegung des Werkzeugadapters (1) an der Werkzeugaufnahme (4),
**dadurch gekennzeichnet, dass**
- um einen Umfang des Kegelabschnitts (5) verteilt zwei oder mehr Querbohrungen (6) symmetrisch verteilt sind,
- sich an den Kegelabschnitt (5) ein zylindrischer Abschnitt (8) anschließt.

2. Werkzeugadapter (1) nach Anspruch 1,
**dadurch gekennzeichnet, dass**
der Bund (2) eine Plananlage (3) aufweist, wobei die Plananlage (3) im Betriebszustand unmittelbar an einer Anschlagsfläche (13) der Werkzeugaufnahme (4) anliegt.

3. Werkzeugadapter (1) nach Anspruch 1,
**dadurch gekennzeichnet, dass**
der Werkzeugadapter (1) eine zentrale Bohrung (9) für die innere Kühlmittelzufuhr aufweist.

4. Werkzeugadapter (1) nach Anspruch 1, 2 oder 3,
**dadurch gekennzeichnet, dass**
am zu befestigenden Werkzeug eine, insbesondere zwei mit unterschiedlichen Ausgestaltungen, Mitnehmernuten in axialer Richtung ausgebildet sind und am Werkzeugadapter (1) ein korrespondierender Führungssteg oder umgekehrt.

5. Werkzeugadapter (1) nach einem der vorhergehenden Ansprüche,
**dadurch gekennzeichnet, dass**
die Querbohrungen (6) Kegelbohrungen sind.

6. Werkzeugadapter (1) nach einem der vorhergehenden Ansprüche,
**dadurch gekennzeichnet, dass**
die Plananlage (3) einen Hohlschliff aufweist.

7. Werkzeugadapter (1) nach einem der vorhergehenden Ansprüche,
**dadurch gekennzeichnet, dass**
der zylindrische Abschnitt (8) eine Fase (10) aufweist, insbesondere mit einem Hinterschnitt (11).

8. Werkzeugadapter (1) nach einem der vorhergehenden Ansprüche,
**dadurch gekennzeichnet, dass**
im Umfang des Bundes (2) symmetrisch verteilt Bohrungen (17) für Wuchtgewichte vorgesehen sind.

9. Werkzeugaufnahme (4) für Werkzeugadapter (1) mit einer Öffnung zur Aufnahme eines Kegelabschnitts (5) des Werkzeugadapters (1), einer Anschlagsfläche (13), wobei die Anschlagsfläche (13) im Betriebszustand unmittelbar an einer Plananlage (3) des Werkzeugadapters (1) anliegt, einer radialen Bohrung (14) zur Aufnahme eines Spannbolzens (7) zur Festlegung des Werkzeugadapters (1) an der Werkzeugaufnahme (4),
**dadurch gekennzeichnet, dass**
- um einen Umfang der kegelförmigen Öffnung in der Werkzeugaufnahme (4) verteilt zwei oder mehr Bohrungen (14) symmetrisch verteilt sind,
- sich an die kegelförmige Öffnung eine zylindrische Ausnehmung (15) anschließt.

10. Werkzeugaufnahme (4) nach Anspruch 9,
**dadurch gekennzeichnet, dass**
die Werkzeugaufnahme (4) nach einem der Ansprüche 2 bis 8 ausgebildet ist.

11. Werkzeugadaptersystem bestehend einem Werkzeugadapter (1) nach einem der Ansprüche 1 bis 8 und einer Werkzeugaufnahme (4) nach Anspruch 9 oder 10.
